# EUROPEAN PATENT APPLICATION

(11) **EP 2 639 928 A2**
(43) Date of publication of application: **18.09.2013**
(21) Application number: 13156655.6
(22) Date of filing: 25.02.2013
(51) Int. Cl.: H02J 9/06

(54) **Power management circuit and electronic device**

(30) Priority: 13.03.2012 CN 201210064645
(71) Applicant: Hong Fu Jin Precision Industry (ShenZhen) Co., Ltd., Shenzhen City, Guangdong 518109 (CN); Hon Hai Precision Industry Co., Ltd., New Taipei City (TW)
(72) Inventor: Cheng, Hai-Long, 518109 Shenzhen City (CN); Wang, Tao, 518109 Shenzhen City (CN); Deng, Xue-Bing, 518109 Shenzhen City (CN); Ma, Xiao-Hui, 518109 Shenzhen City (CN); Li, Xin-Ping, 518109 Shenzhen City (CN)
(74) Representative: Gray, John James

(57) **Abstract**

A power source (100) includes a first power terminal (101) for outputting a first supply voltage. A power management circuit (200) includes a pulse width modulation unit (24) having an input power terminal (240), a first switch unit (22) capable of being turned on to establish an electrical connection between the first power terminal (101) and the input power terminal (240) or being turned off to cut off the electrical connection, and a storage unit (25). The input power terminal (240) receives the first supply voltage from the first power terminal (101) when the first switch unit (22) is turned on, the pulse width modulation unit (24) is powered by the first supply voltage to generate a pulse voltage at the output terminal (242). The storage unit (25) receives the first supply voltage to store energy when the pulse voltage is in a first level, and releases energy to generate an operating voltage for powering the load (300) when the pulse voltage is in a second level.

## Description

The power management circuit is widely used in electronic devices. The power management circuit is connected between a power source and a load, the power management circuit receives a supply voltage from the power source and provides an operation voltage to the load in response to an external control signal. The power management circuit has a feedback terminal, a sampling circuit samples the operation voltage to generate a sampling voltage and outputs the sampling voltage to the feedback terminal. The power management circuit adjusts the operation voltage according to the sampling voltage.

However, the adjustment of the power management circuit is limited, when the supply voltage is suddenly reduced, the operation voltage is also reduced. Therefore, the reduced operation voltage may not be enough to power the load.

Therefore, there is room for improvement in the art.

### Summary

According to an exemplary embodiment of the invention, a power source includes a first power terminal for outputting a first supply voltage. A power management circuit includes a pulse width modulation unit having an input power terminal, a first switch unit capable of being turned on to establish an electrical connection between the first power terminal and the input power terminal or being turned off to cut off the electrical connection, and a storage unit. The input power terminal receives the first supply voltage from the first power terminal when the first switch unit is turned on, the pulse width modulation unit is powered by the first supply voltage to generate a pulse voltage at the output terminal. The storage unit receives the first supply voltage to store energy when the pulse voltage is in a first level, and releases energy to generate an operating voltage for powering the load when the pulse voltage is in a second level. Therefore, the operation voltage is enough to power the load.

### BRIEF DESCRIPTION OF THE DRAWINGS

The components of the drawings are not necessarily drawn to scale, the emphasis instead being placed upon clearly illustrating the principles of the embodiments of an electronic device. Moreover, in the drawings, like reference numerals designate corresponding parts throughout two views.

FIG. 1 is a block diagram of an electronic device in accordance with one embodiment.

FIG. 2 is a circuit diagram of the electronic device of FIG. 1 in accordance with one embodiment.

### DETAILED DESCRIPTION

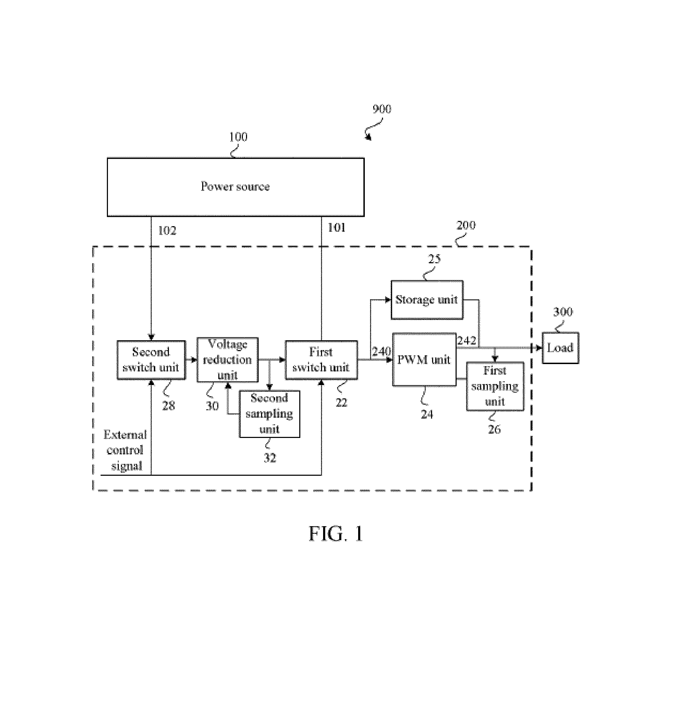

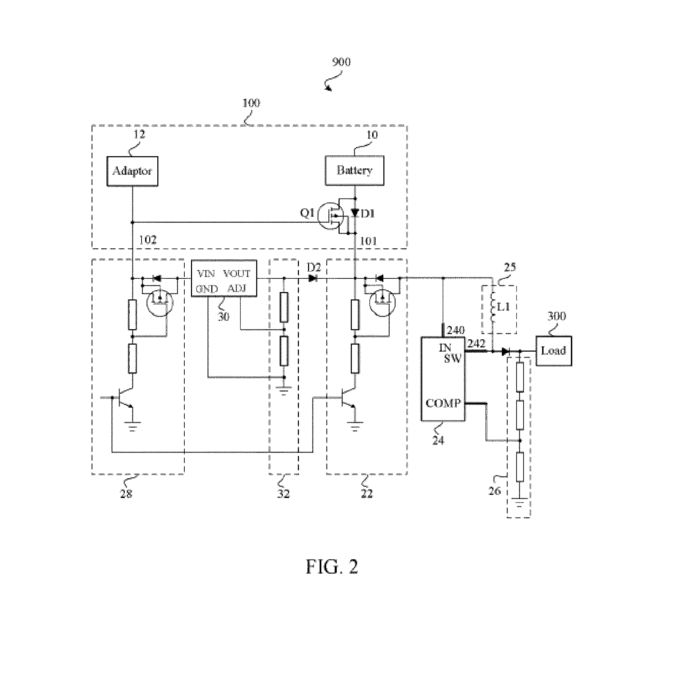

Referring to FIG. 1, an electronic device 900 includes a power source 100, a load 300, and a power management circuit 200 connected between the power source 100 and the load 300. The power source 100 includes a first power supply 10, a second power supply 12 (see FIG. 2), a first power terminal 101, and a second power terminal 102. The first power supply 10 outputs a first supply voltage through the first power terminal 101, the second power supply 12 outputs a second supply voltage through the second power terminal 102. When the first power terminal 101 outputs the first supply voltage, the second power terminal 102 stops outputting the second supply voltage; when the second power terminal 102 outputs the second supply voltage, the first power terminal 101 stops outputting the first supply voltage.

Firstly, we describe a first situation when the first power terminal 101 outputs the first supply voltage and the second power terminal 102 stops outputting the second supply voltage. The power management circuit 200 includes a first switch unit 22, a pulse width modulation (PWM) unit 24 having an input power terminal 240 and an output terminal 242, a storage unit 25, and a first sampling unit 26. The first switch unit 22 is capable of being turned on to establish a first electrical connection between the first power terminal 101 and the input power terminal 240 or being turned off to cut off the first electrical connection. In this embodiment, the first switch unit 22 is turned on or turned off in response to an external control signal.

The input power terminal 240 receives the first supply voltage from the first power terminal 101 when the first switch unit 22 is turned on, thus the pulse width modulation unit 24 is powered by the first supply voltage to generate a pulse voltage at the output terminal 242. The storage unit 25 is connected between the input power terminal 240 and the output terminal 242. The storage unit 25 receives the first supply voltage to store energy when the pulse voltage is in a first level, and releases energy to generate an operating voltage at the output terminal 242 when the pulse voltage is in a second level; the operating voltage powers the load 300.

In this embodiment, the first level is a low level, the second level is a high level; furthermore, when the pulse voltage is in the first level, the pulse voltage is zero volts, when the pulse voltage is in the second level, the pulse voltage is equal to the first supply voltage and the operating voltage is equal to two times the first supply voltage.

The first sampling unit 26 samples the operating voltage to generate a sampling voltage, the pulse width modulation unit 24 adjusts a duty cycle of the pulse voltage according to the sampling voltage. In detail, when the sampling voltage is larger than a threshold voltage, the pulse width modulation unit 24 decreases the duty cycle; when the sampling voltage is smaller than the threshold voltage, the pulse width modulation unit 24 increases the duty cycle. Therefore, the operating voltage keeps stable.

Secondly, we describe a second situation when the second power terminal 102 outputs the second supply voltage, the first power terminal 101 stops outputting the first supply voltage. The power management circuit 200 further includes a second switch unit 28, a voltage reduction unit 30, and a second sampling unit 32.

The second switch unit 28 is connected between the second power terminal 102 and the voltage reduction unit 30. The second switch unit 28 is capable of being turned on to establish a second electrical connection between the second power terminal 102 and the voltage reduction unit 30 or being turned off to cut off the second electrical connection. In this embodiment, the first switch unit 22 and second switch unit 28 are simultaneously turned on or turned off in response to the external control signal.

The voltage reduction unit 30 receives the second supply voltage from the second power terminal 102 through the second switch unit 28 when the second switch unit 28 is turned on, reduces the second supply voltage, and provides the reduced second supply voltage to the input power terminal 240 of the pulse width modulation unit 24 through the first switch unit 22 when the first switch unit 22 is turned on. The pulse width modulation unit 24 is powered by the reduced second supply voltage to generate the pulse voltage at the output terminal 242. Therefore, the storage unit 25 receives the reduced second supply voltage to store energy when the pulse voltage is in the first level, and releases energy to generate the operating voltage at the output terminal 242 when the pulse voltage is in the second level.

Second sampling unit 32 samples the reduced second supply voltage to generate a sampling signal, the voltage reduction unit 30 adjusts the reduced second supply voltage according to the sampling signal, therefore keeping the reduced second supply voltage stable.

Referring to FIG. 2, the power management unit 200 further includes a second diode D2. The power source 100 comprises a first power supply 10 for outputting the first supply voltage, a second power supply 12 outputting the second supply voltage, a transistor Q1 and a first diode D1. The gate of the transistor Q1 is connected to the second power supply 12, the drain of the transistor Q1 is connected to the first power supply 10, the source of the transistor Q1 is connected to a cathode of the second diode D2 and the first switch unit 22, and an anode of the second diode D2 is connected to the voltage reduction unit 30. An anode of the first diode D1 is connected to the drain of the transistor Q1, a cathode of the first diode D1 is connected to the source of the transistor Q1.

The source of the transistor Q1 receives the reduced second supply voltage from the voltage reduction unit 30 when the second switch unit 28 is turned on, the reduced second supply voltage is larger than the first supply voltage, thus the transistor Q1 is turned off and the first diode D1 is reverse-biased; therefore, the first power terminal 101 stops outputting the first supply voltage and the second power terminal 102 outputs the second supply voltage. When the second power supply 12 stops outputting the second supply voltage, the transistor Q1 is turned on and the first diode D1 is forward-biased, therefore the first power terminal 101 outputs the first supply voltage and the second power terminal 102 stops outputting the second supply voltage.

In this embodiment, the first power supply 10 is a battery, the second power supply 12 is an adaptor for converting an AC voltage (for example, 220 volts) to a DC voltage, the DC voltage is equal to the second supply voltage.

The storage unit 25 comprises an inductor L1, one end of the inductor L1 is connected to the input power terminal 240, and the other end of the inductor L1 is connected to the output terminal 242. In other embodiments, the storage unit 25 comprises a capacitor, one end of the capacitor is connected to the input power terminal 240, and the other end of the capacitor is connected to the output terminal 242.

In the electronic device 900, when the first supply voltage or the second supply voltage is suddenly decreased, because the storage unit 25 stores energy when the pulse voltage is in the low level and release energy when the pulse voltage is in the high level, the operation voltage will still power the load 300.

Further alternative embodiments will become apparent to those skilled in the art without departing from the spirit and scope of what is claimed. Accordingly, the present invention should be deemed not to be limited to the above detailed description, but rather only by the claims that follow and equivalents thereof.

## Claims

1. A power management circuit connected between a power source and a load, the power source comprising a first power terminal for outputting a first supply voltage; the power management circuit comprising:
a pulse width modulation unit having an input power terminal and an output terminal;
a first switch unit capable of being turned on to establish a first electrical connection between the first power terminal and the input power terminal or being turned off to cut off the first electrical connection; and
a storage unit connected between the input power terminal and the output terminal;
wherein the input power terminal receives the first supply voltage from the first power terminal when the first switch unit is turned on, the pulse width modulation unit is powered by the first supply voltage to generate a pulse voltage at the output terminal; the storage unit receives the first supply voltage to store energy when the pulse voltage is in a first level, and releases energy to generate an operating voltage at the output terminal when the pulse voltage is in a second level; the operating voltage powers the load.

2. The power management circuit of claim 1, further comprising: a first sampling unit, wherein the first sampling unit samples the operating voltage to generate a sampling voltage, the pulse width modulation unit adjusts a duty cycle of the pulse voltage according to the sampling voltage.

3. The power management circuit of claim 2, wherein when the sampling voltage is larger than a threshold voltage, the pulse width modulation unit decreases the duty cycle; when the sampling voltage is smaller than the threshold voltage, the pulse width modulation unit increases the duty cycle.

4. The power management circuit of claim 1, 2 or 3, wherein the storage unit comprises an inductor, one end of the inductor is connected to the input power terminal, and the other end of the inductor is connected to the output terminal.

5. The power management circuit of claim 1, 2, 3 or 4, wherein the power source further comprises a second power terminal for outputting a second supply voltage; when the first power terminal outputs the first supply voltage, the second power terminal stops outputting the second supply voltage; when the second power terminal outputs the second supply voltage, the first power terminal stops outputting the first supply voltage; the power management circuit further comprises a voltage reduction unit and a second switch unit capable of being turned on to establish a second electrical connection between the second power terminal and the voltage reduction unit or being turned off to cut off the second electrical connection; the voltage reduction unit receives the second supply voltage from the second power terminal through the second switch unit when the second switch unit is turned on, reduces the second supply voltage, and provides the reduced second supply voltage to the input power terminal of the pulse width modulation unit through the first switch unit when the first switch unit is turned on; the pulse width modulation unit is powered by the reduced second supply voltage to generate the pulse voltage at the output terminal.

6. The power management circuit of claim 5, further comprising a second diode, wherein the power source comprises a first power supply for outputting the first supply voltage, a second power supply for outputting the second supply voltage, a transistor, and a first diode; the gate of the transistor is connected to the second power supply, the drain of the transistor is connected to the first power supply, the source of the transistor is connected to a cathode of the second diode and the first switch unit, an anode of the second diode is connected to the voltage reduction unit; an anode of the first diode is connected to the drain of the transistor, a cathode of the first diode is connected to the source of the transistor; the source of the transistor receives the reduced second supply voltage when the second switch unit is turned on, the reduced second supply voltage is larger than the first supply voltage, thus the transistor is turned off and the first diode is reverse-biased.

7. The power management circuit of claim 5 or 6, wherein the first switch unit and the second switch unit are simultaneously turned on or turned off in response to an external control signal.

8. An electronic device, comprising:
a power source comprising a first power terminal for outputting a first supply voltage;
a load; and
a power management circuit connected between the power source and the load; the power management circuit comprising:
a pulse width modulation unit having an input power terminal and an output terminal;
a first switch unit capable of being turned on to establish a first electrical connection between the first power terminal and the input power terminal or being turned off to cut off the first electrical connection; and
a storage unit connected between the input power terminal and the output terminal;
wherein the input power terminal receives the first supply voltage from the first power terminal when the first switch unit is turned on, the pulse width modulation unit is powered by the first supply voltage to generate a pulse voltage at the output terminal; the storage unit receives the first supply voltage to store energy when the pulse voltage is in a first level, and releases energy to generate an operating voltage at the output terminal when the pulse voltage is in a second level; the operating voltage powers the load.

9. The electronic device of claim 8, further comprising: a first sampling unit, wherein the first sampling unit samples the operating voltage to generate a sampling voltage, the pulse width modulation unit adjusts a duty cycle of the pulse voltage according to the sampling voltage.

10. The electronic device of claim 9, wherein when the sampling voltage is larger than a threshold voltage, the pulse width modulation unit decreases the duty cycle; when the sampling voltage is smaller than the threshold voltage, the pulse width modulation unit increases the duty cycle.

11. The electronic device of claim 8, 9 or 10, wherein the storage unit comprises a capacitor, one end of the capacitor is connected to the input power terminal, and the other end of the capacitor is connected to the output terminal.

12. The electronic device of claim 8, 9, 10 or 11, wherein the power source further comprises a second power terminal for outputting a second supply voltage; when the first power terminal outputs the first supply voltage, the second power terminal stops outputting the second supply voltage; when the second power terminal outputs the second supply voltage, the first power terminal stops outputting the first supply voltage; the power management circuit further comprises a voltage reduction unit and a second switch unit capable of being turned on to establish a second electrical connection between the second power terminal and the voltage reduction unit or being turned off to cut off the second electrical connection; the voltage reduction unit receives the second supply voltage from the second power terminal through the second switch unit when the second switch unit is turned on, reduces the second supply voltage, and provides the reduced second supply voltage to the input power terminal of the pulse width modulation unit through the first switch unit when the first switch unit is turned on; the pulse width modulation unit is powered by the reduced second supply voltage to generate the pulse voltage at the output terminal.

13. The electronic device of claim 12, wherein the storage unit receives the reduced second supply voltage to store energy when the pulse voltage is in the first level, and releases energy to generate the operating voltage at the output terminal when the pulse voltage is in the second level.

14. The electronic device of claim 12 or 13, wherein the power management circuit further comprises a second diode, the power source comprises a first power supply for outputting the first supply voltage, a second power supply for outputting the second supply voltage, a transistor, and a first diode; the gate of the transistor is connected to the second power supply, the drain of the transistor is connected to the first power supply, the source of the transistor is connected to a cathode of the second diode and the first switch unit, an anode of the second diode is connected to the voltage reduction unit; an anode of the first diode is connected to the drain of the transistor, a cathode of the first diode is connected to the source of the transistor; the source of the transistor receives the reduced second supply voltage when the second switch unit is turned on, the reduced second supply voltage is larger than the first supply voltage, thus the transistor is turned off and the first diode is reverse-biased.

15. The electronic device of claim 12, 13 or 14, wherein the first switch unit and the second switch unit are simultaneously turned on or turned off in response to an external control signal.
